Europäisches Patentamt

European Patent Office

Office européen des brevets

(11) Publication number: **0 048 361**
**A2**

(12) # EUROPEAN PATENT APPLICATION

(21) Application number: **81106890.7**

(22) Date of filing: **03.09.81**

(51) Int. Cl.³: **G 01 N 27/90**

(30) Priority: **22.09.80 CA 360743**

(43) Date of publication of application:
**31.03.82 Bulletin 82/13**

(84) Designated Contracting States:
**DE FR GB IT**

(71) Applicant: **O'Connor, Henry Moncrieff**
**Box 67 Site 15, SS 3**
**Fredericton New Brunswick E3B 5W9(CA)**

(72) Inventor: **O'Connor, Henry Moncrieff**
**Box 67 Site 15, SS 3**
**Fredericton New Brunswick E3B 5W9(CA)**

(74) Representative: **Denmark, James**
**c/o Bailey Walsh & Co. 5 York Place**
**Leeds LS1 2SD Yorkshire(GB)**

(54) Three phase eddy current instrument.

(57) This invention relates to an eddy current instrument with an improved sensitivity to certain types of variables in cylindrical test objects. The prior art employs an encircling type probe that can test one section of an object along its axis, or the prior art employs a probe that is normal to the surface of an object and can test all of the object by physically rotating the probe around the object. This invention provides for an array of probes that are electronically rotated around a cylindrical object.

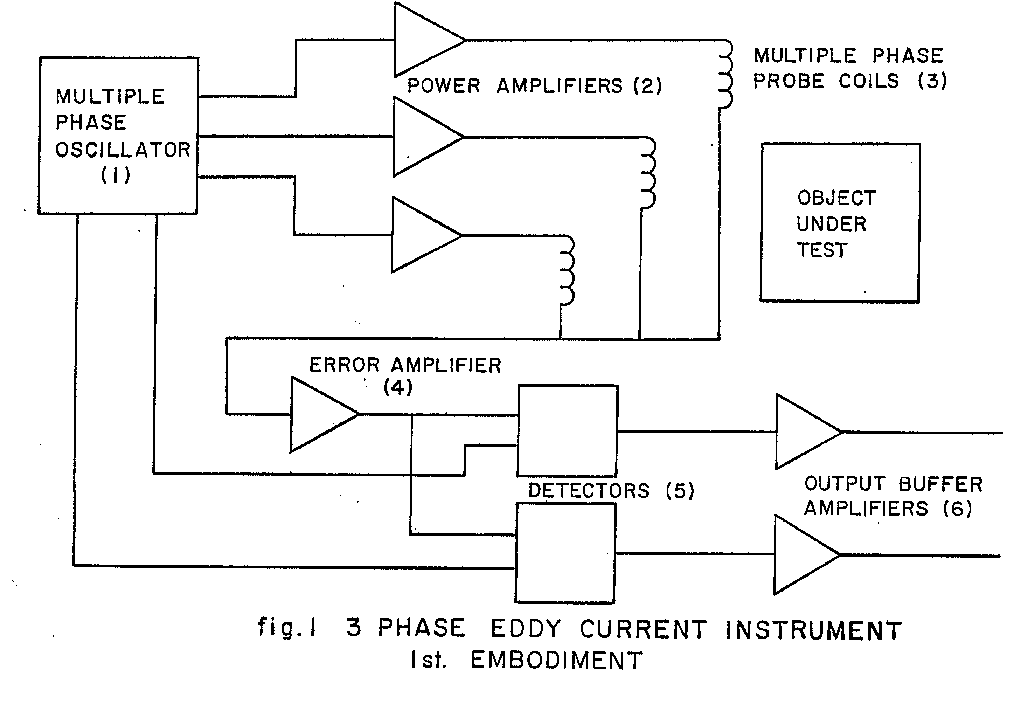

fig.1 3 PHASE EDDY CURRENT INSTRUMENT
1st. EMBODIMENT

Croydon Printing Company Ltd.

./...

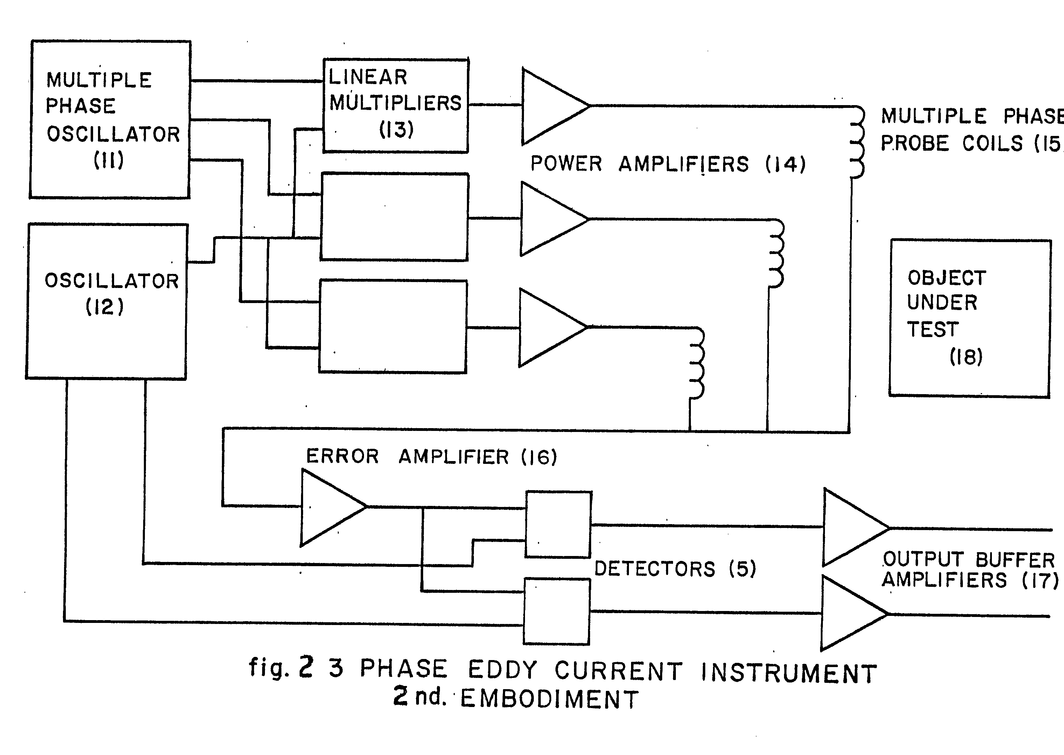

fig. 2  3 PHASE EDDY CURRENT INSTRUMENT
2 nd. EMBODIMENT

- 1 -

## Three Phase Eddy Current Instrument

This invention relates to an apparatus for locating defects, measuring conductivity, permeability and dimensional changes in materials capable of conducting electric current and more particularly to a system which will electromagnetically test with equal efficiency a wide variety of materials having different electrical characteristics.

The prior art uses one or two inspection coils in an absolute or differential configuration or uses two or three coils in an absolute send-receive or differential send-receive mode.

This invention relates to the use of three or more coils [3] excited with an AC electrical current with a different phase relationship for each coil or group of coils [3]. For example in the preferred embodiment a single frequency oscillator [1] at the desired inspection frequency with outputs in three different phase relations, for example 0°, 120°, and 240° is used. This three phase output is applied to a three winding probe connected in star formation. If each of the three coils is oriented such that the plane of each coil is placed at angles of 0°, 120°, and 240°, then the resulting magnetic field will be a field constant in magnitude but rotating about the center of the three coils [3] at the frequency of the oscillator [1].

This arrangement is analogic to a three phase induction motor which has three windings which are excited with a three phase 60 Hz source. The resulting rotating magnetic field causes the rotor of the machine to rotate.

This invention applied the rotating electro-magnetic field to a metal object such as a round bar or tube. The metal object reflects some of the electro magnetic field back to the three coils. As a result the probe impedance will be a function of the metal object.

If the three phase excitation is a constant voltage source of equal magnitude to each coil, if each coil is identical and the test object is symmetrical and symmetrically placed with respect to the coils, then the voltage (8) at the junction connection will be zero. Any non-symmetric defect, discontinuity, change in dimension, electrical resistivity, or permeability, will cause the coil impedances to differ from each other. This imbalance in impedances of the coils (3) will result in a voltage (8), the error signal, at the junction of the coils (3). The phase and amplitude or the Fourier components of this error signal will be a measure of change in the test object.

Analysis of this error signal to determine the characteristics of the test object will be similar to conventional eddy current techniques except that the phase of the error signal will be a function of the angular position of the condition being measured. Also the error signal will not respond to symmetrical changes in the test object (7) such as skip fin zones, support plates, tube

0048361

- 3 -

sheets, rolled zones, but will detect incomplete circumferential cracks.

In a different embodiment, the desired inspection need not, but may, be in three phases. Instead, a much lower frequency oscillator (11) provides outputs at three different phases. The first frequency amplitude is modulated in linear multipliers (13) (or other amplitude modulators) by each of the three phases of the second oscillator (11). These three modulated signals are applied to the three coils as in the previous description. The resulting magnetic field is an alternating magnetic field at the desired inspection frequency (first oscillator (12)) which rotates at the speed of the second oscillator (11).

This embodiment, as well as being able to detect all conditions that the previous embodiment can, is sensitive to symmetrical changes in the test object and can therefore detect support plates, roll expanded zones, skip fin zones, tube sheets, and complete circumferential cracks.

It is understood in the above descriptions, that more than three phases can be used to accomplish the same end and that more than one coil per winding may be used to better distribute the electro-magnetic field. Further it is understood that the coils need not be arranged at any particular angular relationship to each other. For example, the coils could be arranged in one plane to create an electro-magnetic field that is translating. It is further understood that the desired inspection frequency is not limited to one but may be any number of frequencies. The separate components of these frequencies are separated with bandpass filters before detection or by low pass filters following linear multiplier detectors or the frequencies may be time domain multiplexed.

Further it is understood this embodiment is not limited to testing metal bar or tubing but may serve to test any electrically conductive or magnetically permeable object. It is further understood that the coil arrangement need not be a star configuration but could be a delta configuration.

It is understood that one or more suitable transformers may be used to isolate the probe coils from the power amplifiers and that the output signal may be combined or displayed or recorded in any manner.

Claims:

1. An apparatus for testing objects made of electrically conductive material separately or simultaneously for defects, dimensions, conductivity, or permeability, with eddy currents comprising: a probe means comprising three or more coils electrically connected in a star or delta configuration to cause, when energized with an alternating current, a series of alternating magnetic fields each field penetrating the respective test object, the coils being arranged so that the resulting magnetic field rotates or translates to scan the object, such that any imbalance in impedance of the said coils caused by change in the test object will cause a signal in the form of an imbalance voltage at the center of the star connection or an imbalance in the current through or voltage across each coil. Means for energizing said probe with said coils with a three or more phase alternating current to produce said alternating magnetic fields. Means for detecting said imbalance signal and evaluating it for at least one of the properties comprising defects, dimensions, conductivity, or permeability.

2. An apparatus as set forth in claim 1, said means adapted for separate three or more send coils energized with alternating electric currents and separate three or more receive coils.

3. An apparatus as set forth in claim 1, and in claim 2, said means adapted that the said alternating current be a multidimensional alternating current comprising two or more simultaneous frequencies.

4. An apparatus as set forth in claim 1, claim 2, or claim 3, in which the said alternating current to each coil be amplitude modulated with a lower frequency, the modulation signal for each coil having three or more phases to produce an alternating magnetic field which is rotating.

fig.1  3 PHASE EDDY CURRENT INSTRUMENT
1st. EMBODIMENT

MULTIPLE PHASE OSCILLATOR (1)

POWER AMPLIFIERS (2)

MULTIPLE PHASE PROBE COILS (3)

OBJECT UNDER TEST

ERROR AMPLIFIER (4)

DETECTORS (5)

OUTPUT BUFFER AMPLIFIERS (6)

1/2

0048361

fig. 2 3 PHASE EDDY CURRENT INSTRUMENT 2 nd. EMBODIMENT